# EUROPEAN PATENT SPECIFICATION

(11) **EP 1 605 785 B1**
(45) Date of publication and mention of the grant of the patent: **22.11.2006**
(21) Application number: 04721581.9
(22) Date of filing: 18.03.2004
(51) Int. Cl.: A24C 5/34

(54) **IGNITION SYSTEM FOR A SMOKING MACHINE**
ZÜNDSYSTEM FÜR EINE RAUCHMASCHINE
SYSTEME D'ALLUMAGE POUR MACHINE A FUMER

(30) Priority: 18.03.2003 GB 0306190
(43) Date of publication of application: 21.12.2005
(73) Proprietor: MOLINS PLC, Milton Keynes, MK14 5LU (GB)
(72) Inventor: TWELFTREE, Martin, Milton Keynes MK14 6LY (GB)
(74) Representative: Williams, Michael Ian
(86) International application number: PCT/GB2004/001140
(87) International publication number: WO 2004/082408

(56) References cited:
- EP-A- 0 581 596
- EP-A- 0 880 020
- US-A- 4 858 628

## Description

The present invention relates in general to improvements in and relating to smoking machines for smoking articles such as cigarettes, cigars and cigarillos. More particularly, the invention relates to an improved ignition system for igniting smoking articles for smoking by a smoking machine.

Regular testing of cigarettes on a smoking machine is an important part of any cigarette manufacturing process. A smoking machine serves to create a repeatable standardised environment for the analytical smoking of cigarettes. International and national standards, including ISO standard 3308 (2000), have been put in place for standardising the operation of smoking machines.

A smoking machine typically comprises at least one holder for a cigarette, and a puffing means for drawing air in controlled fashion through the cigarette in regular short puffs in order to smoke the cigarette. The smoking machine typically comprises or is adapted to engage with at least one lighter tool which comprises a heat source such as a resistive coil for lighting the cigarette. The machine usually also comprises or is adapted to engage with a variety of other tools, including tools for measuring or observing particular smoking characteristics, such as puff profile and leak check tools and/or air velocity tools.

It is desirable that the lighter tool should be capable of lighting the cigarette at the first attempt. Multiple attempts at lighting the cigarette may result in pre-charring, which may alter the smoking characteristics of the cigarette or otherwise disrupt any measurements which are to be taken. ISO standard 3308 (2000) indeed requires that a smoking machine should be capable of lighting cigarettes at the first attempt and without pre-charring. Furthermore, the need for multiple attempts at lighting is clearly inefficient.

Evidently, the distance separating the heat source of the lighter tool from the cigarette end will have a profound effect on the success of ignition. If the heat source is too remote from the cigarette end, then the chances of successful lighting at first attempt will be diminished. On the other hand, if the heat source is too close to the cigarette, then the ignition process may result in heat damage to the cigarette which may alter its smoking characteristics. Actual contact between the heat source and the cigarette during ignition is particularly undesirable and is not permitted under ISO standard 3308 (2000). Typically, a separation of 0.5-1.0mm between the heat source and the cigarette end at the point of ignition is viewed as desirable.

Some difficulty has however been encountered in achieving precision positioning (to within about 1.0mm) of the cigarette and lighter tool. Once a cigarette has been loaded into a smoking machine, the position of the unlit tip with respect to the smoking machine depends primarily upon the length of the cigarette and the depth of insertion of the cigarette into the smoking machine. Owing to the tolerances of manufacturing processes, the lengths of individual cigarettes from a batch typically vary within a range of 1-2mm, giving rise to a corresponding uncertainty in the predicted length of a cigarette from the batch. Meanwhile, the depth of insertion of a given cigarette into a given smoking machine may also vary by around 1-2mm, depending primarily on the force with which the cigarette is inserted into the machine. The combined effect of these uncertainties is an overall uncertainty of up to 4mm in the predicted location of any single cigarette tip with respect to the smoking machine. Precision positioning of the lighter tool with respect to each cigarette tip, based on the predicted location of the cigarette tip, is therefore impossible.

Various attempts have been made to address this problem. According to one method, individual cigarettes are adjusted by hand following insertion into the smoking machine, such that each cigarette protrudes by a predetermined distance from the machine. This method successfully achieves uniform positioning of cigarettes within the smoking machine for the purposes of ignition, but is time-consuming and inefficient. Attempts have also been made to design lighter tools which are capable of reliably lighting cigarettes over a range of distances varying by several millimetres. Although the benefits of automation are preserved, such tools however have costly power requirements in operation, and may cause heat damage to cigarettes.

There remains therefore a need for an improved apparatus for automatically and reliably lighting cigarettes for smoking by a smoking machine.

According to one aspect of the present invention therefore, there is provided an ignition system for a smoking machine, comprising a heat source that is adapted for emitting heat for igniting one end of a smoking article which is held by a smoking machine; an automatic sensor which is adapted for detecting the position of said end of the smoking article; and control means in communication with said sensor, which are adapted for automatically adjusting a parameter of the operation of said heat source depending on the position of said end as detected by said sensor, such as to enable successful ignition of said end by said heat source.

According to another aspect of the present invention, there is provided a smoking machine comprising holding means for holding a smoking article such as to expose one end thereof, puffing means positioned adjacent the other end of the smoking article for drawing air through the smoking article, and an ignition system in accordance with the invention for igniting said one end of the smoking article such that the article can be smoked by the smoking machine.

In use of the present invention, the sensor acts to detect the position of the end of the smoking article, and communicates information in this regard to the control means. Based on this information, the control means makes automatic adjustments as necessary to the operation of the heat source, such as to enable successful ignition of the smoking article by the heat source. Successful ignition may denote ignition at the first or the second, preferably the first, attempt.
Furthermore, successful ignition may denote ignition of the smoking article without any undesired heat damage to the article and/or without contact between the smoking article and the heat source during emission of heat by the heat source.

Said ignition system may be adapted for igniting a plurality of smoking articles. Thus, said ignition system may comprise a plurality of heat sources, each of which is associated with a respective automatic sensor in the manner hereinbefore described.

It will be understood that the heat source may emit heat for igniting the end of said smoking article by conduction, by convection or by radiation, or by any combination of conduction, convection and radiation. More typically, said heat source may emit heat by radiation or convection or by a combination of radiation and convection. Said heat source may, for example, comprise a heatable coil, plate, element or other surface, such as a resistive coil, resistive plate, or other resistive heating element or surface heated thereby. Such a heat source will emit heat for igniting the end of said smoking article by a combination of electromagnetic radiation and convection of heated air. The power of said heat source may be in the region of 30-100W, such as between 40-60W, such as about 50W. Alternatively, said heat source may comprise a laser, or an incandescent bulb such as a halogen bulb, for example a halogen bulb of about 120-200W, which will emit heat for igniting the end of said smoking article primarily by electromagnetic radiation. Heat sources of all of these types are known in the art. Said heat source may conveniently be powered by electricity.

As will be appreciated by the skilled man, once the location of the end of the smoking article has been accurately determined, a variety of adjustments may be made to the components of the ignition system and/or the smoking machine so as to ensure successful ignition of the smoking article by the ignition system.

Parameters of the operation of the heat source which may affect the reliability and success of ignition include the temperature of the heat source; the channelling of heat from the heat source to the end of the smoking article; the level and wavelength range of electromagnetic radiation that is applied by the heat source to the end of the smoking article; the length of time for which heat is applied to the end of the smoking article for igniting the article; and the timing of the application of heat to the end of the smoking article for igniting the article with respect to the "puff cycle" of a smoking machine. By adjusting any or all of these parameters, the control means may serve to enable successful ignition of a smoking article by the heat source without any or any further adjustments in relative movement of the heat source and/or said smoking article. Said control means may therefore be adapted for calculating the type and extent of any adjustments to any of these parameters which may be required for enabling successful ignition, in view of the known position of the end of the smoking article (as detected by said sensor), and for securing the performance of such adjustments. It will be appreciated however that said control means may be adapted for adjusting any or all of the aforementioned parameters of the operation of the heat source in addition to adjusting relative movement of said heat source and/or said smoking article.

Where said heat source is adapted for emitting heat by air convection for igniting said end of the smoking article, said control means may be adapted to automatically adjust the temperature of the heat source, the adjustment depending upon the location of said end, as detected by the sensor. Clearly, where said end is located at a greater distance from said heat source, successful ignition can nonetheless be achieved through increasing the temperature of the heat source. Conversely, where said end is located at a smaller distance from said heat source, successful ignition without undue heat damage to the smoking article can nonetheless be attained through decreasing the temperature of the heat source.

Variation in the temperature of the heat source may for example be achieved by adjusting the power input which energises the heat source. Thus, said control means may comprise a regulator or switch operably connected to said heat source, whereby the power input to said heat source may be controlled. In particular, where the heat source is powered by electricity, said control means may be adapted for controlling the average voltage or amperage supplied to said source such as to up- or down-regulate the temperature of said heat source. Thus, said control means may for example comprise a variable resistor, a switch means, or a pulse width modulator such as an FET. Alternatively, or in addition, said control means may comprise a cooling means such as a heat sink which is operable when required to reduce the temperature of the heat source.

Alternatively, or in addition, said control means may be adapted to adjust the channelling of heat from said heat source to said end of the smoking article, by selectively dispersing heat away from the end of the smoking article and/or selectively directing heat towards the smoking article, as required. Thus, for example, said control means may comprise channelling means such as a plurality of adjustable fins, which channelling means can be positioned in a first orientation whereby the channelling means serve to disperse heat away from the end of the smoking article and/or in a second orientation whereby the channelling means serve to direct heat towards the end of the smoking article, which channelling means may optionally be removable. Thus, for example, where the end of the smoking article is positioned at a greater distance from the heat source, said channelling means may be adjusted such as to direct heat towards the end of the smoking article, in order to enable successful ignition of said smoking article by the heat source. Conversely, where the end of the smoking article is positioned at a smaller distance from the heat source, said channelling means may be adjusted such as to disperse heat away from the end of the smoking article, in order to enable successful ignition of said smoking article by the heat source.

Said greater distance may denote a distance of more than about 2mm, or more than about 1.5mm, or more than about 1mm. Said smaller distance may denote a distance of less than about 1mm, or less than about 0.5mm.

Where said heat source is (alternatively or in addition) adapted for emitting heat for igniting said end of the smoking article by electromagnetic radiation, said control means may be adapted for automatically adjusting the level and/or the wavelength range of electromagnetic radiation that is applied by the heat source to the end of the smoking article for igniting the article, the adjustment depending upon the position of said end as detected by the sensor. When exposed to electromagnetic radiation, the end of a smoking article (which is typically primarily composed of tobacco) will absorb radiation in particular wavelength ranges according to its absorption spectrum. Radiation absorbed by the end of the smoking article will serve to heat the end towards and beyond its ignition temperature, which may lead to ignition. It is evident therefore that by selectively irradiating said end of the smoking article with radiation in a wavelength range which is absorbed by the end, and/or by increasing the overall level of radiation that is applied to said end of the smoking article, the heating effect of the electromagnetic radiation on the end of the smoking article will be enhanced. Conversely, by selectively irradiating said end of the smoking article with radiation in a wavelength range which is not absorbed or not efficiently absorbed by the end, and/or by decreasing the overall level of radiation that is applied to said end of the smoking article, the heating effect of the electromagnetic radiation on the end of the smoking article will be diminished.

Said control means may therefore be adapted for automatically adjusting the level and/or the wavelength range of electromagnetic radiation that is emitted from the heat source. Adjustments in the level of radiation emitted may be readily achieved by adjusting the power input to said heat source, so as to respectively increase or decrease the level of radiation that is emitted by the heat source. Thus, said control means may comprise a switch or regulator operably connected to said heat source for controlling the power input to said heat source. Adjustments in the wavelength range of electromagnetic radiation that is emitted by the heat source may similarly be achieved through control of the operation of the heat source. For example, where said heat source comprises a halogen bulb, the halogen bulb will typically be configured to enable the wavelength of the light emitted by the halogen bulb to be selected as required. Thus, said control means may be adapted for selecting an appropriate wavelength for generation by the halogen bulb.

Alternatively, or in addition, said control means may be adapted for adjusting the level and/or the wavelength range of electromagnetic radiation that is transmitted from the heat source to the end of the smoking article. In order to adjust the level of electromagnetic radiation that is transmitted from the heat source to the end of the smoking article, said control means may be adapted for adjustably shielding and/or obscuring said heat source from said end of the smoking article, and/or for selectively focusing radiation emitted by said heat source onto said end, and/or for selectively deflecting radiation emitted by said heat source away from said end. Thus, said control means may include adjustable shield means, such as an iris-type adjustable shield, which can be positioned and adjusted in order to shield a selected area of the heat source from the end of the smoking article. Said control means may include adjustable reflecting and/or refracting means which are adapted to selectively focus or direct radiation emitted from the heat source towards said end of the smoking article. Additionally or alternatively, said control means may comprise adjustable refracting and/or deflecting means which are adapted to selectively direct radiation emitted from the heat source away from the end of the smoking article. Additionally or alternatively, said control means may comprise at least one thermal filter, which thermal filter is adapted to absorb or reflect a proportion of radiation impinging on the filter, which thermal filter is arranged to be removably positioned between said heat source and the end of the smoking article such as to prevent the transmission of a proportion of radiation emitted from said heat source towards said smoking article. Optionally, said control means may comprise a plurality of thermal filters, any number of which can be positioned in parallel between said heat source and the end of the smoking article. By altering the number of filters positioned between said heat source and the smoking article, the quantity of electromagnetic radiation transmitted from the heat source to the smoking article may be adjusted as required. Alternatively, said control means may comprise one or more variable filters, each variable filter including a plurality of discrete areas with different absorption/reflection characteristics, such that by positioning the variable filter between the heat source and the end of the smoking article and moving the variable filter relative to the heat source and the smoking article, the quantity of electromagnetic radiation transmitted from the heat source to the smoking article may be adjusted as required.

In addition or alternatively, in order to adjust the wavelength range of the electromagnetic radiation that is transmitted from the heat source to the end of the smoking article, said control means may comprise a dichroic filter or a plurality of dichroic filters which are adapted for selectively reflecting or selectively transmitting electromagnetic radiation in a specific wavelength range or ranges, which dichroic filter or filters are arranged to be placed intermediate said heat source and said end of the smoking article, for filtering radiation directed from said heat source towards said end of the smoking article. A dichroic filter suitable for use in the present invention may, for example, comprise a transparent substrate, such as a glass substrate, said substrate being provided with two or more layers of different filter media; the nature of the filter media and the thickness and arrangement of each of the layers being selected such that the filter is capable of transmitting electromagnetic radiation only at certain wavelengths. Said layers of filter media may, for example, comprise one or more layers of titanium dioxide, interspersed with one or more layers of silicon dioxide. In some embodiments, the nature of the filter media and the thickness and arrangement of the layers may vary across the surface of the substrate, such that the reflection/transmission characteristics of the dichroic filter vary across the surface of the filter. Thus, said dichroic filter may be arranged to transmit through a first portion of the filter only radiation in a first wavelength range, such as radiation in the range from 380nm to 700nm; and may be arranged to transmit through a second portion of the filter only radiation in a second wavelength range, such as radiation in the range from 1200nm to 2000nm. Alternatively, a plurality of dichroic filters may be provided, each filter being arranged to transmit only radiation in a certain wavelength band, such as from 380nm-800nm, from 700nm to 1000nm, from 900nm to 1200nm, and from 1100nm to 1500nm, and means may be provided for selectively placing a chosen one or more of said filters between the heat source and the end of the smoking article, such that only radiation of a particular predetermined wavelength range may be transmitted from said heat source to said end of the smoking article.

Said control means may be adapted to automatically adjust the time for which heat is applied to the end of the smoking article for igniting the article, depending upon the location of said end.

Notwithstanding a larger separation between said heat source and said end, successful ignition may for example be attained by lengthening the period during which heat is applied to the end of the article. Thus, said control means may be adapted for calculating the period of time for which heat should be applied to the end of the article for successfully igniting said end, and for effectively terminating the application of heat to said end after said period of time has elapsed. Said control means may for example comprise switch means for respectively switching on and/or off power input to said heat source in order to respectively initiate or terminate the application of heat to said end.
Alternatively, said control means may be adapted for respectively exposing or shielding, or for respectively installing or removing, said heat source, or for otherwise respectively permitting or blocking the emission of heat by said heat source, in order to respectively initiate or terminate the application of heat to said end.

Said control means may be adapted to automatically adjust the timing of the application of heat with respect to the puff cycle of a smoking machine, depending upon the position of said end of the smoking article as detected by the sensor. Smoking machines operate by drawing air through a smoking article in regular bursts or "puffs", typically once every 60s or so. The period between the start of one puff and the start of the next puff is known as the "puff cycle". The puff cycle consists of a short puff, typically 2s in duration, followed by a pause.

The optimal time for ignition of a smoking article is during the puffing phase of the puff cycle. Thus, by initiating the application of heat to the end of a smoking article early in the puffing phase of the puff cycle, thereby lengthening the period of time during the puffing phase for which heat is applied to the end, the likelihood of successful ignition, even where the heat source is positioned at a distance from the end of the article, may be increased. The likelihood of successful ignition may be yet further increased by initiating the application of heat to the end of a smoking article just prior to the start of the puffing phase. This will permit pre-heating of the end which will "prime" the end for ready ignition at the start of the puffing phase.

Hence, said control means may be arranged to be operatively connected to a smoking machine such as to detect and monitor the timing of the puff cycle, and may be arranged to control the relative timings of the initiation of application of heat from the heat source to the end of the smoking article and the start of the puff cycle, in order to ensure successful ignition of said end. Said control means may therefore be arranged to control the timing of the initiation of application of heat from the heat source to the end of the smoking article, and/or the timing of the start of the puff cycle, whereby the relative timings of these events may be controlled.

The distance separating said heat source from said end of the article during emission of heat from the heat source is typically a key parameter affecting the reliability and success of ignition, regardless of the manner in which heat is emitted by the heat source. Thus, said control means may be adapted to automatically adjust relative movement of said heat source and/or said smoking article, such that a predetermined distance separates said heat source from said end of the smoking article, whereby said end of the smoking article can be successfully ignited by the heat source.

Suitably, therefore, said heat source may be capable of movement with respect to said smoking article, and said control means may be adapted for controlling movement of said heat source, whereby the heat source under the control of said control means can be moved into or halted at a selected position. Alternatively, or in addition, said control means may be adapted for controlling movement of a smoking article held by a smoking machine, whereby said smoking article under the control of said control means can be moved into or halted at a selected position. By thus controlling relative movement of said heat source and/or said smoking article in view of the known position of said end of the smoking article, a predetermined distance separating said heat source from said end of the smoking article may readily be achieved.

Said sensor may be arranged such as to detect the end of a smoking article when said end is disposed at said predetermined distance from the heat source, or when said end is positioned such that after subsequent movement of said smoking article and/or said heat source along a pre-set locus, said end will be disposed at said predetermined distance from the heat source. Alternatively, said ignition system may be arranged such that following detection of said end of the smoking article by said sensor, said heat source and/or said smoking article are moved under the control of the control means such as to achieve said predetermined distance between said heat source and said end of the smoking article.

Suitably, said control means may be adapted to ensure that said heat source and said smoking article remain out of contact with one another during emission of heat by the heat source.

In some preferred embodiments, said sensor may be fixed in a known position with respect to said heat source, and may be adapted for detecting said end of the smoking article when said end is in a desired position with respect to said heat source, and for transmitting a detection signal to said control means. Thus, said heat source and said sensor may be movable with respect to said smoking article, and said control means may be adapted for terminating movement of said heat source and said sensor with respect to said smoking article on receipt of said detection signal from said sensor. In this case, the sensor may be conceptualised as "hunting" for the end of the smoking article. Alternatively or in addition, said smoking article may be movable with respect to said heat source and said sensor, and said control means may be adapted for terminating movement of said smoking article with respect to said heat source and said sensor on receipt of said detection signal from said sensor. In this case, the smoking article may be conceptualised as "probing" for the sensor.

Any sensor capable of detecting the end of said smoking article when said end is in a specified position is suitable for use in these embodiments. For example, said sensor may comprise an emitter capable of emitting a signal and a detector capable of receiving and detecting said signal from the emitter, the emitter and detector being arranged such that when said end is positioned between said emitter and said detector, transmission of said signal from said emitter to said detector is interrupted, and said detection signal is triggered. The triggering of the detection signal accordingly signifies that the end of the smoking article is positioned between said emitter and said detector. Alternatively, said sensor may comprise an emitter capable of emitting a signal and a detector capable of receiving and detecting said signal from the emitter, the emitter and detector being arranged such that when said end is in a predetermined location relative to the emitter, said signal emitted from the emitter is reflected from said end and is transmitted to said detector for detection, and said detection signal is triggered. Accordingly, the triggering of the detection signal signifies that the end is in said predetermined position. Said signal may be an electromagnetic wave signal, such as a laser signal, or a radiowave, microwave or visible light signal, or a sound wave signal such as an ultrasonic wave signal. As yet a further alternative, said sensor may be a contact sensor which is adapted for detecting the end of a smoking article when said end contacts or moves out of contact with the sensor.

Alternatively, said sensor may be adapted for detecting signals caused by the proximity of said end; such as variations in air flow or air pressure, or variations in electrostatic or capacitive electric field; and for triggering said detection signal in response. The triggering of the detection signal will accordingly signify that said end is proximate to the sensor.

In other favourable embodiments, said sensor may be adapted for identifying the position of said end of the smoking article amongst a range of possible locations. In one possible aspect, therefore, said sensor may comprise a range-finding sensor, such as a laser or radar sensor, which is capable of transmitting signals which are adapted to be reflected from a target, detecting signals reflected from said target, and analysing said reflected signals, whereby the location of said target can be calculated. Said range-finding sensor may be fixed in a known position with respect to said heat source, and may be adapted for identifying the location of said end with respect to said heat source. Alternatively, said range-finding sensor may be adapted to be fixed in a known position with respect to said holding means, and may be adapted for measuring the location of said end of the smoking article with respect to the holding means. In another possible aspect, said sensor may comprise any sensor as hereinabove defined which is capable of detecting the end of said smoking article when said end is in a specified position, which sensor is adapted to be moved with respect to said heat source such as to hunt for said end, and means for identifying the position of the sensor with respect to said heat source, such that the location of said end, once detected by the sensor, can be identified.

As yet a further alternative, said sensor may comprise a camera type device which is capable of visualising the smoking article and/or a shadow cast by the smoking article, whereby the position of the end of the smoking article may be detected.

In some embodiments, the arrangement may be such that said end of the smoking article can be selectively shielded from said heat source, such as to prevent substantial transfer of heat from said heat source to said end. Thus, when the heat source and the smoking article are positioned for ignition, said end may be shielded from the heat source and said heat source may be energised without substantial transfer of heat from the heat source to the end during the course of energisation. Once the heat source is fully energised, said end may be exposed to the heat source, thus enabling ignition of the end to take place.

Accordingly, said heat source may be adapted to move along a pre-set path between a first exposed orientation, in which the heat source is arranged to face said end such that said end is exposed to the heat source, and a second shielded orientation, in which the heat source is arranged to face away from said end such that said end is shielded from said heat source. Alternatively, or in addition, one or more barriers formed from a heat-impermeable material may be provided for selectively shielding said end from said heat source. Said one or more barriers may be adapted to be installed adjacent said heat source for shielding the heat source, and to be removed in order to expose said heat source.

Said control means may include control hardware which is programmed to control the performance of the functions hereinabove defined. In particular, said control hardware may include processing means for receiving said detection signal and for calculating the type and extent of adjustments which should be made to the components of the ignition system and/or the smoking machine so as to enable successful ignition of said smoking article, and for effecting said adjustments. Said control hardware may be arranged to be located in a smoking machine, and/or in said ignition system.

Said smoking article may be a rolled smoking article, such as a cigarette, cigar or cigarillo. Suitably, said end of the smoking article may be the end which is ignited by a smoker in use; that is, the non-filter end.

Preferably, said lighting system and said smoking machine may be capable of satisfying one or more ISO standards including ISO standard 3308 (2000), and/or one or more FTC standards, and/or one or more CORESTA standards, and/or any other applicable national or international standards. Smoking machines suitable for use in conjunction with the present invention are widely available and in common use in the art.

Said smoking machine may be capable of holding a plurality of smoking articles, and said lighting system may be adapted for igniting each of said smoking articles consecutively. Preferably, said smoking machine may be adapted for moving each smoking article which is to be ignited to a position such that the end of the smoking article is within a small distance, such as to within a few centimetres or a few millimetres, of said ignition head, prior to detection of said end by the sensor and consequent adjustment of the ignition head and/or the position of the smoking article.

The components of said ignition system may be provided in the form of an integral tool, or in the form of a kit of components which are adapted to be assembled with one another and/or with a smoking machine, whereby the ignition system can function as hereinabove described.

Following is a description, by way of example only and with reference to the accompanying drawings, of embodiments of the present invention and modes for putting the invention into effect.

In the drawings :
Figure 1 shows a top view of an ignition system in accordance with the invention, in the start position.
Figure 2 shows a side view, partly cut away, of the ignition system of Figure 1.
Figure 3 shows a top view of the ignition system of Figure 1, after detection of a cigarette.
Figure 4 shows a side view, partly cut away, of the ignition system of Figure 3.
Figure 5 shows a top view of the ignition system of Figure 1, at the point of ignition.
Figure 6 shows a side view, partly cut away, of the ignition system of Figure 5.
Figures 7a to 7c illustrate a mode of operation of the ignition system shown in Figures 1-6.
Figure 8(a) illustrates the start position for a mode of operation of a second embodiment of an ignition system in accordance with the invention.
Figure 8(b) shows a top view of an ignition system as illustrated in Figure 8(a).
Figure 8(c) shows a side view, partly cut away, of the ignition system of Figure 8(b).
Figure 9(a) illustrates the probing position for a mode of operation of the ignition system shown in Figure 8.
Figure 9(b) shows a top view of an ignition system as illustrated in Figure 9(a).
Figure 9(c) shows a side view, partly cut away, of the ignition system of Figure 9(b).
Figure 10(a) illustrates the igniting position for a mode of operation of the ignition system shown in Figures 8 and 9.
Figure 10(b) shows a top view of an ignition system as illustrated in Figure 10(a).
Figure 10(c) shows a side view, partly cut away, of the ignition system of Figure 10(b).
Figures 11a to 11c illustrate an alternative mode of operation of an ignition system in accordance with the present invention.
Figures 12a and 12b illustrate an alternative mode of operation of an ignition system in accordance with the present invention.
Figure 13 illustrates a variable dichroic filter for use in the present invention.
Figure 14 illustrates an alternative mode of operation of an ignition system in accordance with the present invention.

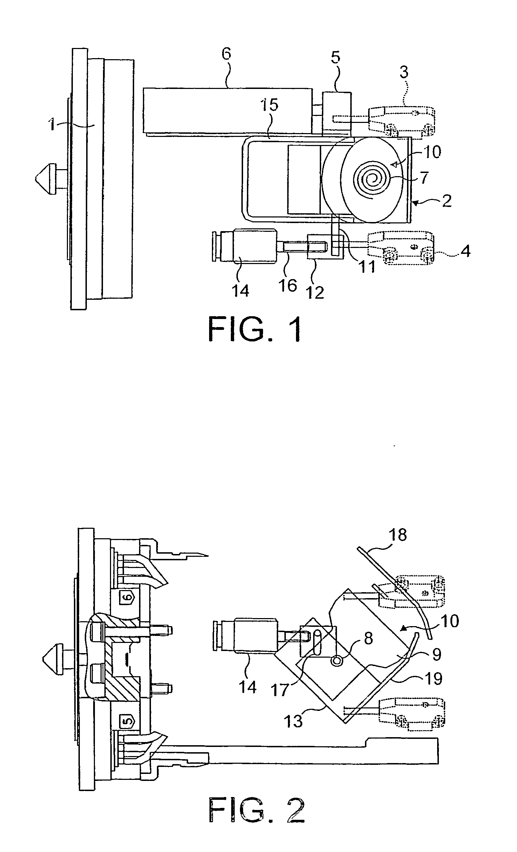

An embodiment of an ignition system in accordance with the present invention is shown in Figures 1-6. As seen in these Figures, the ignition system comprises a base plate 1 which is adapted to be engaged with a smoking machine; an ignition head 2 for igniting cigarettes or other smoking articles; and a break-beam sensor for detecting the end of a smoking article such as a cigarette, which sensor includes a beam emitter 3 and a beam detector 4.

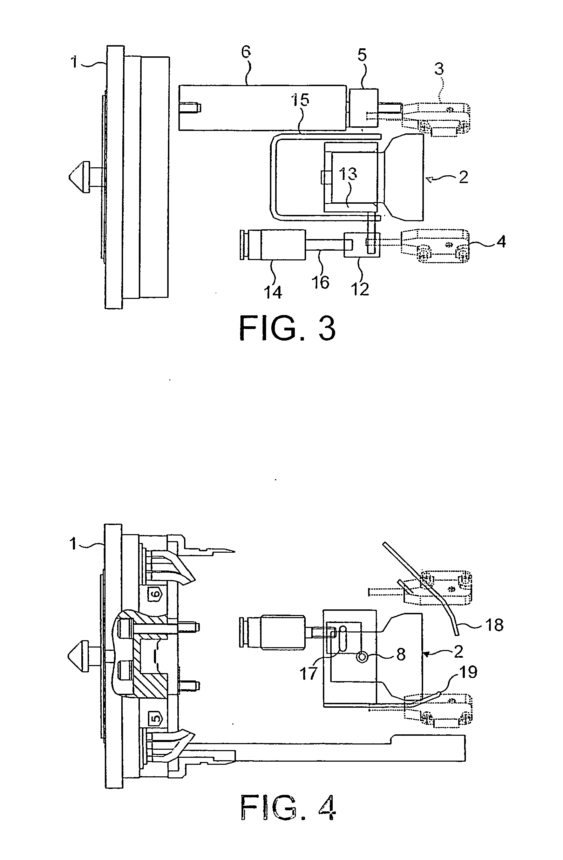

Said ignition head 2 comprises a resistive coil 7, which resistive coil 7 is adapted to be connected to a source of electrical power (not shown), whereby the coil 7 can be energised and heated to a temperature sufficient for igniting a cigarette or other smoking article. As will be appreciated by the skilled man, the coil when heated will serve to emit heat both by air convection and by electromagnetic radiation. Resistive coil 7 is mounted within a protective holder which is formed from a heat-insulating material such as a ceramic material. As seen in Figure 2, said holder is substantially bowl-shaped, comprising an enclosing shield wall 9 which defines an open mouth 10 by which the coil 7 is exposed. The base of said holder is gripped by a sleeve 13 formed from a lightweight material such as aluminium.

Said ignition head 2 is mounted with respect to the base plate 1 such that said open mouth 10 points in a forwards direction away from the base plate 1. As hereinafter described, the ignition head 2 is movable forwards and backwards with respect to the base plate 1, and is pivotable such that said open mouth 10 can be swung relative to the base plate 1.

Said sleeve 13 comprises two pins 8 which protrude outwardly from respectively opposing sides of the sleeve 13. The pins are mounted to the internal walls of a bracket 15, the arrangement being such that the sleeve 13 and the holder mounted therein can pivot relative to the bracket 15.

Said bracket 15 is rigidly connected on one side thereof to a piston head 5, which piston head 5 is mounted on a piston rod that is slidable within a first pneumatic cylinder 6, the arrangement being such that said bracket 15 is slidable relative to said first pneumatic cylinder 6. Said first pneumatic cylinder 6 is bolted to said base plate 1 and extends forwardly away from said base plate 1, as illustrated in Figure 1. The pneumatic cylinder is operable to cause the piston head 5, together with said bracket 15 and said ignition head 2 which are mounted on the piston head 5, to slide forwards and backwards with respect to the base plate 1.

Said bracket 15 is rigidly connected on the other side thereof to a second pneumatic cylinder 14. A piston rod 16 is slidably mounted within said second pneumatic cylinder 14, and is slidable on operation of said second pneumatic cylinder 14. The piston rod 16 is arranged to be active on a block 12, whereby the block 12 can be propelled away from said second pneumatic cylinder 14 on operation of said second pneumatic cylinder 14. As seen in Figure 1, said second pneumatic cylinder 14 is oriented parallel to said first pneumatic cylinder 6, such that the operation of said second pneumatic cylinder 14 results in forwards propulsion of said block 12 relative to said bracket 15, and away from the base plate 1.

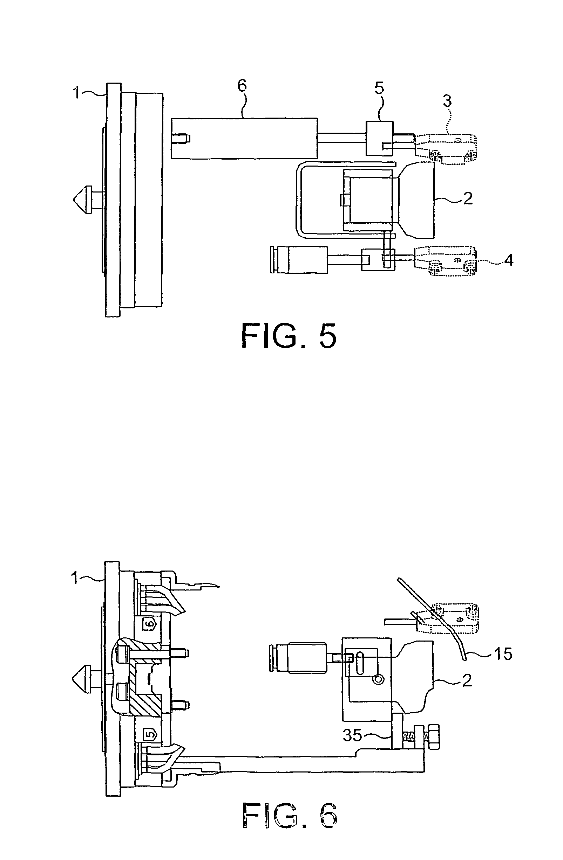

Said block 12 includes a slot 17 which accommodates a spindle 11. Said spindle 11 extends laterally away from the block 12 and is rigidly connected to said sleeve 13. The arrangement is such that as said block 12 is propelled forwardly away from the base plate 1, said spindle 11 is caused to move transversely in a forwards direction away from the base plate 1, and consequently said sleeve 13 and ignition head 2, being pivotably mounted by way of said pins 8, is caused to pivot forwardly with respect to said base plate 1, in a clockwise direction as shown in Figures 2 and 4.

A spring (not shown) is active on said ignition head 2, for biasing said ignition head 2 in an anticlockwise direction as shown in Figures 2 and 4. The configuration of said second pneumatic cylinder 14, said piston rod 16 and said block 12 is such that when the piston rod 16 is fully withdrawn into said second pneumatic cylinder 14, as shown in Figure 2, the ignition head 2 is disposed at an angle of approximately 45o to said base plate 1. In this position, the open mouth 10 of the ignition head 2 is shielded by way of a guard wall 18 as seen in Figure 2, which guard wall 18 is fixedly mounted on said piston head 5. Said guard wall 18 is formed from a heat-reflective material such as stainless steel, and is shaped to correspond roughly to the shape of said open mouth 10, in order to permit effective shielding of said mouth 10. Further anticlockwise rotation of said ignition head 2 beyond this shielded position is prohibited by the fixed position of said second pneumatic cylinder 14 on said bracket 15.

When said second pneumatic cylinder 14 is operated for propelling said block 12 and spindle 11 in a forwards direction, said ignition head 2 is caused to pivot in a clockwise direction as shown in Figure 2, against the biasing force of said spring. The arrangement is such that when said piston rod 16 is fully extended from said second pneumatic cylinder 14, as shown in Figure 4, the ignition head 2 is disposed such that said open mouth 10 faces forwardly away from the base plate 1. The ignition head 2 is thus deployed for igniting a smoking article placed forwardly from said base plate 1.

As seen in Figures 2 and 4, a second guard wall 19, formed from stainless steel, is fixed to said sleeve 13 of the ignition head 2, and serves to reduce peripheral heat loss from the open mouth 10, thereby diminishing undesired pre-heating of a smoking article prior to ignition.

As seen in the Figures, said beam emitter 3 and said beam detector 4 are fixedly mounted on respectively opposing sides of said bracket 15. Said beam emitter 3 is adapted for emitting a constant detectable signal, such as a beam of visible light, which beam is directed towards said beam detector 4. Beam detector 4 is capable of detecting and monitoring said beam. If and when an object, such as the end of a cigarette or other smoking article, extends between said beam emitter 3 and said beam detector 4, the transmission of said beam from the beam emitter to the beam detector is interrupted. Interruption of the beam is detected by the beam detector. On interruption of the beam, the beam detector is configured to generate a detectable signal.

Said beam emitter 3 and detector 4 are conventional pieces of equipment and are obtainable commercially from Sunx Ltd (distributors Industrial Controls (Anglia) Ltd).

The operation of each of said first pneumatic cylinder 6, said second pneumatic cylinder 14, said sensor, and the power supply for energising said resistive coil 7 is controlled by way of control hardware, which may include one or more microchips programmed to control the operation of these components as herein described. The control hardware is arranged to communicate with said sensor, the arrangement being such that said detectable signal generated by the sensor on detection of an object is transmitted to the control hardware. Said control hardware is also adapted for communicating with and controlling the operation of a smoking machine, as hereinbelow described. The control hardware may be located in a smoking machine, or may be provided as part of the ignition system. For example, the control hardware may comprise one or more suitably programmed PICs or EPROMs.

The ignition system may be used for igniting cigarettes or other smoking articles held by a smoking machine. Firstly, the smoking machine is primed as follows. The base plate 1 of the ignition system is engaged with a smoking machine that is primed with at least one smoking article for ignition. The base plate 1 may be engaged with an adjustable component of the smoking machine, which component can be adjusted such as to move the system towards said smoking article to within a few cm or a few mm of the end of said article. The smoking machine may additionally or as an alternative be arranged for moving said smoking article towards said system, to within a few cm or a few mm of said ignition system.

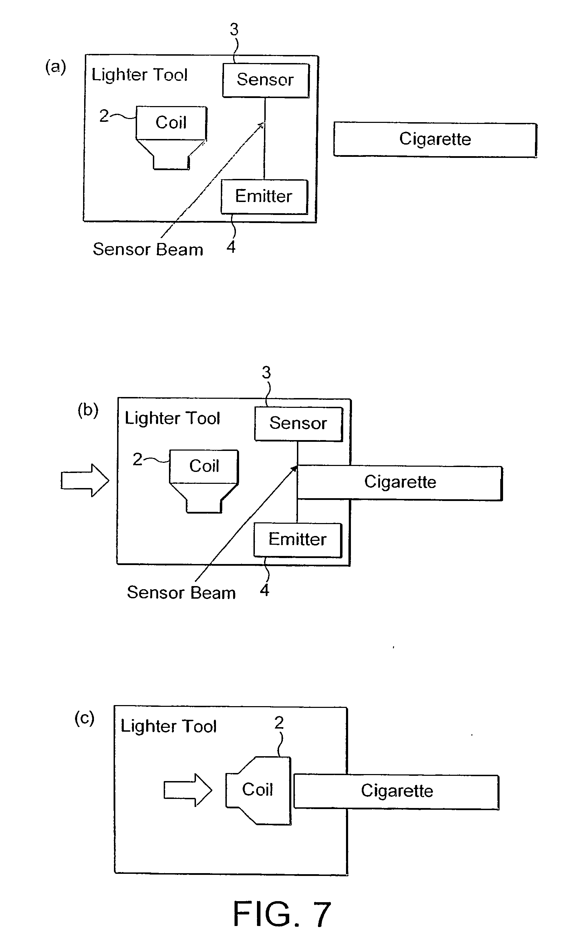

A mode of operation of the ignition system for detecting and igniting the smoking article is illustrated in Figures 7a to 7c, and is described in more detail below. Owing to the biasing action of said spring (not shown), the ignition system initially rests in the start position as illustrated in Figures 1 and 2, with the ignition head 2 in the shielded position. To prime the ignition system for use, said control hardware instructs the switching-on of the power source for said resistive coil 7, such that said coil is energised and heated for ignition. Said control hardware also instructs the switching-on of said sensor.

If the sensor detects the end of the smoking article between said emitter 3 and said detector 4, a detectable signal is generated by said detector 4 as hereinabove described. This detectable signal is transmitted by said sensor to said control hardware, prompting the control hardware to instruct the smoking machine to move the ignition system in a backwards direction, away from said end of the smoking article. When the sensor no longer detects the end of the smoking article between said emitter 3 and said detector 4, the sensor transmits a second detectable signal to the control hardware (or ceases transmission of the first detectable signal to the control hardware), prompting the control hardware to instruct the smoking machine to stop moving the ignition system in a backwards direction.

If the sensor does not detect the end of the smoking article between said emitter 3 and said detector 4, no signal is transmitted by said sensor to the control hardware, and the control hardware accordingly instructs the smoking machine to move the ignition system in a forwards direction, towards the end of the smoking article. Upon detection of the end of the smoking article between said emitter 3 and said detector 4 during forwards propulsion of said ignition system, a signal is transmitted from said sensor to the control hardware, and said hardware instructs said smoking machine to halt further forwards propulsion of said ignition system towards the smoking article.

Owing to the construction and arrangement of a smoking machine, the only object which may normally be detected by said sensor during normal operation of the equipment is the end of a smoking article such as a cigarette which is held by the smoking machine. Accordingly, in normal operation, the detection of any object between said emitter 3 and said detector 4 signals the detection of the end of said smoking article.

Once the end of the smoking article has been detected, and forwards propulsion of the ignition system has ceased as described above, the control hardware instructs the switching-on of said first pneumatic cylinder 6 and said second pneumatic cylinder 14. Each of said first pneumatic cylinder 6 and said second pneumatic cylinder 14 is fitted with a flow restrictor which controls the rate of response of the respective pneumatic cylinder. The flow restrictor fitted to said second pneumatic cylinder 14 is adapted to bring about a rapid response, whilst the flow restrictor fitted to said first pneumatic cylinder 6 is adapted to bring about a slower response. Thus, when said hardware instructs the switching-on of said second pneumatic cylinder 14, this cylinder responds quickly, propelling said block 12 and spindle 11 forwards such as to propel said ignition head 2 in a clockwise direction against the bias of the spring, from said shielded position into the deployed position. Conversely, when said hardware instructs the switching-on of said first pneumatic cylinder 6, this cylinder responds more slowly, propelling said piston head 5 bearing said bracket 15 and ignition head 2 forwardly away from said base plate 1. As illustrated in Figure 6, the piston head 5 continues to move forwardly until the piston 14 contacts a stop 35 provided on a plate rigidly attached to said base plate 1. Further forwards movement of said piston head 5 is thereafter blocked by the stop 35.

The components of the ignition system are configured such that when the piston 14 contacts the stop 35 as described above, the ignition head 2 is located such that a predetermined separation exists between the resistive coil 7 and the end of the smoking article, so as to permit effective ignition of the smoking article by the heated coil. Typically, the ignition head will be located such that the coil 7 is 0.5-1.0mm from the end of said smoking article. However, said predetermined separation between the coil and the end of the smoking article may be freely selected as required by the operator, by appropriate adjustment of the position of said stop 35 prior to initiation of the ignition operation. In order to adjust the position of said adjustable stop correctly, prior to initiation of the ignition operation, the operator may place a smoking article between said emitter and detector such that the end of said article can be detected by the sensor, and may then position the ignition head 2 such that the unheated coil is at a selected distance from the end of said smoking article, the stop 35 then being adjusted such that forwards movement of the ignition head 2 beyond this position is prevented.

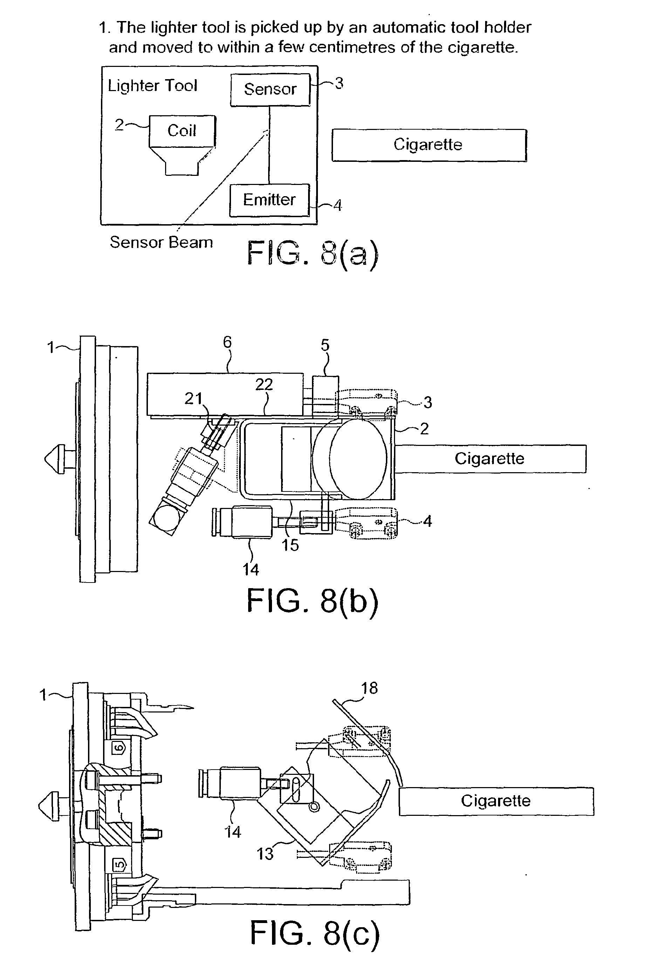

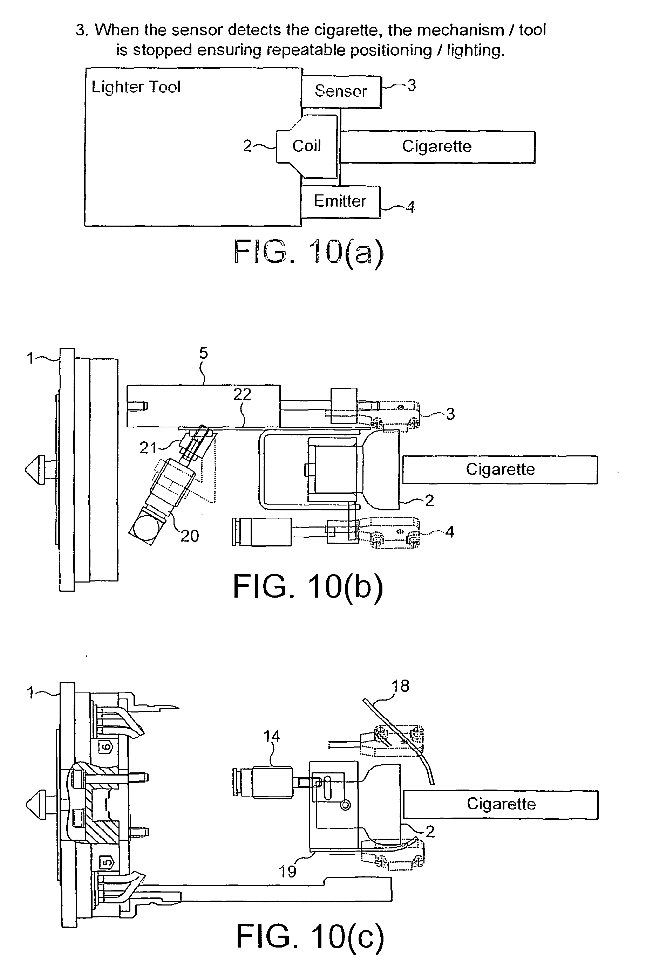

A second embodiment of an ignition system in accordance with the present invention is shown in Figures 8-10. In these Figures, components common to the embodiments shown in Figures 1-6 are referenced with the same reference numerals. Further detailed description of these components and their operation is not necessary.

In contrast to the embodiment shown in Figures 1-6, the embodiment shown in Figures 8-10 is arranged for operating in "real time". Thus, whilst the ignition system shown in Figures 1-6 is arranged such that the position of the smoking article is detected and appropriate adjustments to the ignition system are made whilst the ignition head is in the shielded position and the coil is energised, the ignition head being thereafter adapted to be moved along a predetermined path into position for igniting a smoking article, the ignition system shown in Figures 8-10 is in contrast arranged such that the position of the smoking article is detected and appropriate adjustments to the ignition system are made whilst the ignition head is in the deployed position and the coil is energised. Accordingly, in the latter embodiments, a smoking article the smoking article will be ignited as the ignition head reaches the predetermined location relative to the smoking article.

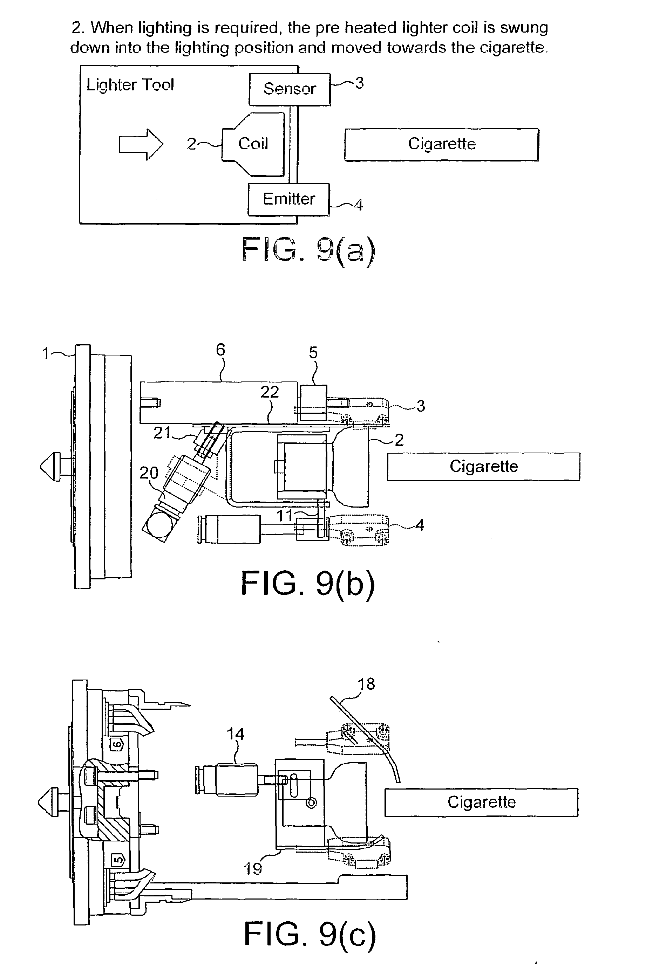

Accordingly, following priming of the smoking machine as hereinabove described, the control hardware of the embodiment shown in Figures 8-10 is arranged first to instruct the switching-on of said second pneumatic cylinder 14, whereby the ignition head 2 is caused to move from said shielded position (Figure 8) into said deployed position (Figure 9) as hereinabove described. Thereafter, the control hardware instructs the switching-on of said first pneumatic cylinder 6, such that said piston head 5 and the components mounted thereon are caused to move forwardly away from said base plate 1.

As seen in Figures 8b and 8c, a braking mechanism is provided for braking the movement of said piston head 5 relative to said pneumatic cylinder 6. A pneumatic braking cylinder 20 is mounted to said base plate 1, whilst a brake strip 22 is mounted to said piston head 5 and extends parallel to said cylinder 6. Said pneumatic braking cylinder 20 is operatively connected to a braking shoe 21, such that on actuation of said braking cylinder 20, the braking shoe 21 presses said braking strip 22 against said first pneumatic cylinder 6, hence braking the movement of said piston head 5 relative to said first pneumatic cylinder 6.

The operation of said pneumatic braking cylinder 20 is controlled by said control hardware. The arrangement is such that when said sensor detects the end of a smoking article and a detectable signal is transmitted to said control hardware, the control hardware instructs the switching-off of said first pneumatic cylinder 6 and the switching-on of said pneumatic braking cylinder 20. Conveniently, these switching operations may be performed simultaneously by means of a valve mechanism which is adapted to switch the pneumatic supply from said first pneumatic cylinder 6 to said pneumatic braking cylinder 14 in response to a command from said control hardware.

The double effect of switching off the first pneumatic cylinder 6 and switching on the braking cylinder 20 causes said ignition head 2 to come rapidly to a halt following detection of an end of a smoking article by the sensor. The ignition system is configured such that the resistive coil 7 of the ignition system is a predetermined distance, such as 0.5-1.0mm, from the end of the smoking article, in order to permit effective ignition of the smoking article by the heated resistive coil.

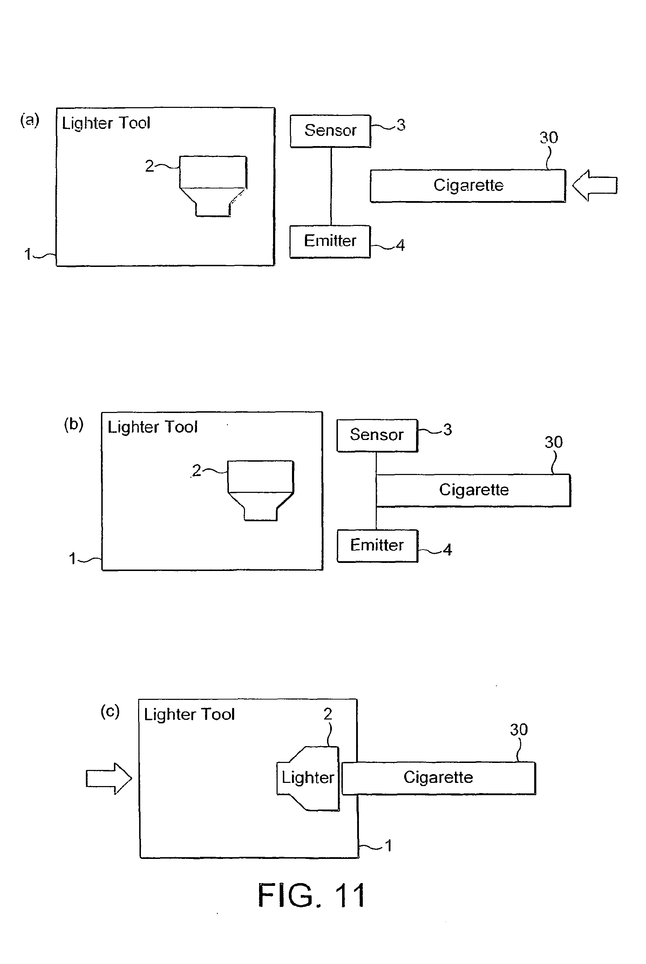

An alternative mode of operation of a ignition system in accordance with the invention is illustrated in Figures 11a to 11c. As will be evident from the following description, this mode of operation is useful only in conjunction with a smoking machine in which the position of the smoking articles held by the machine may be altered. According to this mode, linear movement of the ignition head and sensor may not be required. Hence, whilst either of the ignition systems respectively shown in Figures 1-6 and in Figures 8-10 may be operated according to this mode, alternative embodiments in which the cylinder 6 is, for example, replaced with a non-adjustable mounting arm, may also be operated according to the mode hereinbelow described.

According to this mode, the ignition system is engaged with a smoking machine having adjustable cigarette holders. The control hardware of the ignition system is arranged to communicate with the smoking machine such that the control hardware is capable of controlling the movement of at least one adjustable cigarette holder of the smoking machine. The ignition head 2 is placed in the start position as shown in Figure 11a, and the resistive coil is energised under the control of the control hardware.

A cigarette or other smoking article 30 is inserted into said cigarette holder, and under the control of the control hardware, the cigarette holder is moved towards the ignition head. When the end of the smoking article is detected by the sensor, as illustrated in Figure 11b, a signal is transmitted to the control hardware as hereinabove described, and said control hardware instructs the cigarette holder to cease moving. The ignition head 2 is then moved into the deployed position under the control of the control hardware, as hereinabove described, and is optionally also moved a short predetermined distance towards or away from the base plate 1, also under the control of the control hardware. The arrangement is such that when the end of the smoking article is detectable by the sensor, and once the ignition head has been moved from the shielded position into the deployed position and has optionally been moved a short predetermined distance towards or away from the base plate, then the coil of the ignition head will be at a predetermined distance from the end of the smoking article, in order to enable successful ignition of the smoking article by the coil. Typically, the predetermined distance between the coil and the end of the smoking article will be 0.5-1.0mm.

It will be appreciated that the embodiments and modes of operation hereinabove described work by detecting the end of a smoking article when it has reached a predetermined location with respect to the ignition head, and thereafter (if necessary) moving the ignition head in a predetermined manner such as to dispose the ignition head in the required position and orientation for ignition. Various other embodiments and modes of operation may also be envisaged by the skilled man which work on the same principle, and all such embodiments and modes are encompassed within the scope of this invention.

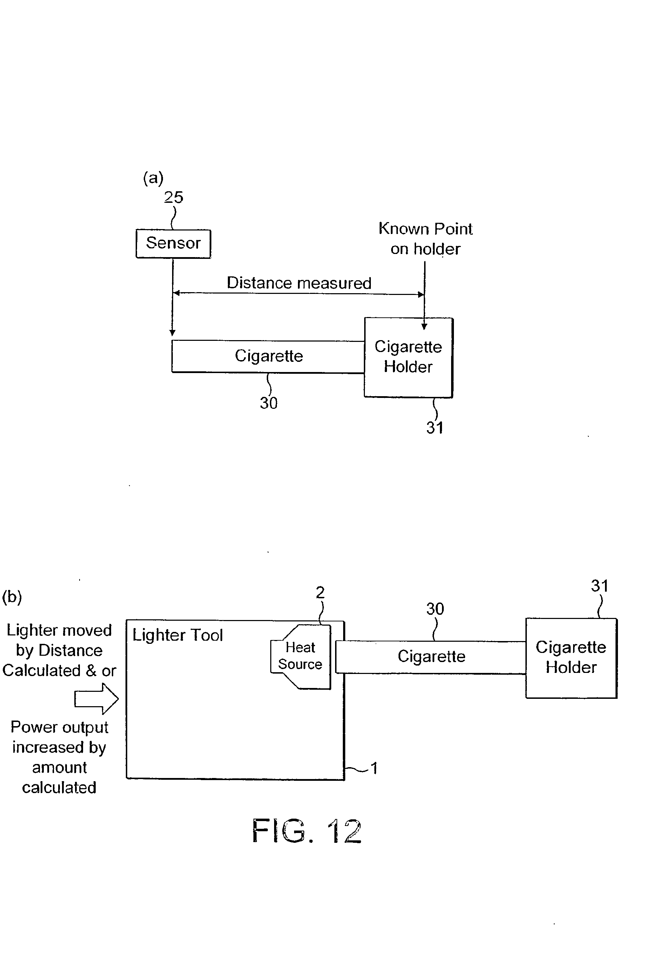

An alternative embodiment and mode of operation of the invention is illustrated in Figures 12a and 12b. The embodiment shown in these Figures is similar in many respects to the embodiment shown in Figures 1-6, and in these respects will not be further described. Features particular to the embodiment shown in Figures 12a and 12b are hereinbelow described.

As seen in Figures 12a and 12b, an ignition system in accordance with the invention comprises an ignition head 2 which is adjustably mounted, in the manner hereinbefore described, on a base plate 1. Adjustment of the position and orientation of said ignition head relative to the base plate 1 is controlled by control hardware (not shown).

The ignition system comprises a sensor 25 which is adapted to take one or more measurements for determining the distance between the end of a smoking article 30 within a holder 31 for use in a smoking machine, and a known point on the holder. Thus, the sensor 25 may be adapted to be positioned on or adjacent a smoking machine. Said sensor 25 is adapted to communicate with said control hardware and to transmit to said control hardware information regarding said measurement. Said sensor may, for example, comprise a range-finding sensor such as a laser sensor.

The control hardware of the ignition system is adapted for processing said information, and for making adjustments to the position and orientation of the ignition head 2, such that when the holder and smoking article have been installed in the smoking machine, and the ignition system and/or holder have been moved by the smoking machine into proximity with one another, the ignition head is positioned at a predetermined distance from the end of the smoking article protruding from the holder.

In knowledge of the position of the end of a smoking article, having been detected by a sensor as hereinabove described, adjustments can also or instead be made by the control hardware to the operation of the resistive coil, whereby the success of ignition may be improved.

For example, if the position of the end of a smoking article held by a smoking machine and in position for ignition is determined to be more than a specified distance (such as about 1.0mm, or about 1.5mm, or about 2mm) from the position of the resistive coil at the point of ignition, then the power generated by the coil, and/or the power transmitted to the end of the smoking article, and/or the length of time for which the end of the smoking article is exposed to the coil, may each be appropriately increased, in order to compensate for the greater separation between the coil and the end of the smoking article, and to ensure successful ignition of the smoking article notwithstanding this increased separation. As a further alternative, the end of the smoking article may be exposed to the heated coil earlier in the puff cycle of the smoking machine, such as at or towards the start of the puff or shortly before the start of the puff. As a further alternative, the wavelength range of electromagnetic radiation transmitted to said end may be selected to be a wavelength that is efficiently absorbed by said end.

Conversely, if the position of the end of a smoking article held by a smoking machine and in position for ignition is determined to be less than a specified distance (such as about 1mm) from the position of the resistive coil at the point of ignition, then the power generated by the coil, and/or the power transmitted to the end of the smoking article, and/or the length of time for which the end of the smoking article is exposed to the coil, may each be appropriately reduced, in order to compensate for the smaller separation between the coil and the end of the smoking article, and to reduce the likelihood of heat damage to the smoking article during the course of ignition, notwithstanding this reduced separation. As a further alternative, the end of the smoking article may be exposed to the heated coil later in the puff cycle of the smoking machine, such as towards the middle or the end of the puff. As a further alternative, a dichroic filter may be provided for filtering out electromagnetic radiation having a wavelength which is absorbed by the end of the smoking article, in order that the end of the smoking article is not exposed to such radiation.

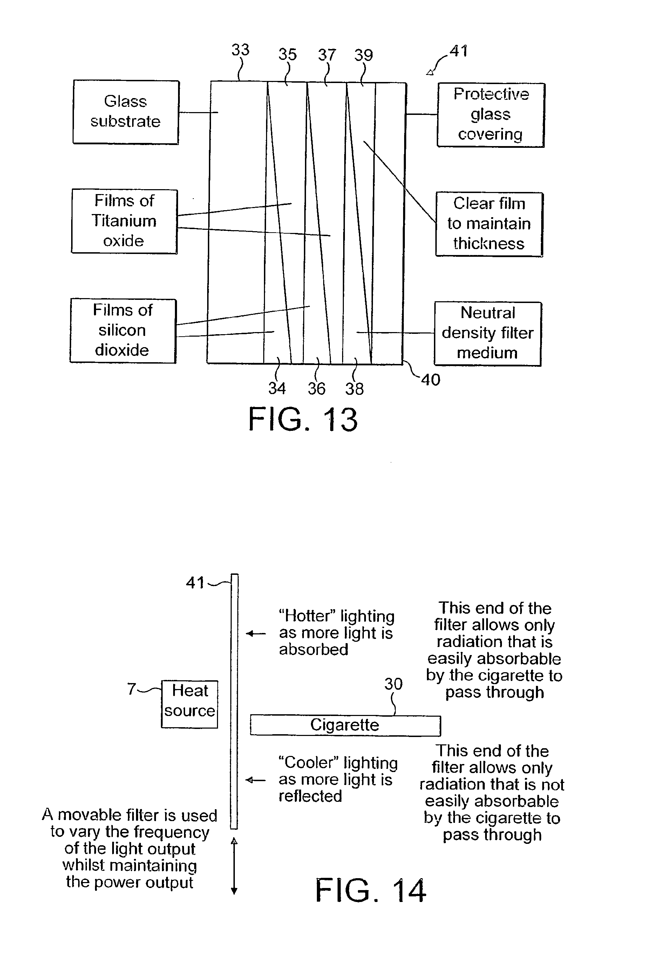

A variable dichroic filter 41 suitable for this purpose is shown in Figure 13. As seen in this Figure, the dichroic filter 41 comprises a glass substrate 33, which substrate is coated with a layer of silicon dioxide 34, a layer of titanium dioxide 35, a second layer of silicon dioxide 36, a second layer of titanium dioxide 37, a layer of a neutral density filter medium 38, and a clear film layer 39. The layers are covered with a protective glass covering 40.

As seen in Figure 13, the thickness of each layer of silicon dioxide and titanium dioxide varies across the surface of the substrate 33, and the thickness of the layer of neutral density filter medium 38 also varies across the surface of the substrate 33. The juxtaposition of the layers and the variation in their thicknesses means that different areas of the filter will transmit electromagnetic radiation within different specific wavelength bands, all other wavelengths being reflected. The variable dichroic filter 41 may therefore be positioned between the coil and the end of the smoking article, as seen in Figure 14, and may be moved relative to the coil and the smoking article under the control of the control hardware, in order to vary the wavelength of radiation transmitted from the coil to the smoking article as desired. According to the absorption spectrum of the end of the smoking article, certain wavelengths of radiation will be efficiently absorbed by the end of the smoking article, whilst other wavelengths will be largely or entirely reflected. Accordingly, the heating power of the radiation which is transmitted to the end of the smoking article may be varied using the dichroic filter as desired.

The control hardware of the ignition system may be adapted so as to be capable of calculating any adjustments required to the operation of the resistive coil in view of the position of the end of the smoking article, and for controlling the outworking of such adjustments. For example, the power generated by the coil may be up- or down-regulated by controlling the power input, such as the voltage applied, to the resistive coil, such as by way of a variable resistor.

The timing and duration of the application of heat to the end of the smoking article may conveniently be controlled under the control of the control hardware by way of a movable shield, or by way of switch means connected to the power input to the coil, although the latter may be less effective owing to the cooling time required for the coil.

The positioning of any filters or shields relative to said coil and the end of said smoking article is also controlled by the control hardware.

The provision of control hardware and the programming of said hardware such that the hardware is capable of instructing and controlling the operation of the ignition system as described above is a routine task within the capability of the man skilled in the art.

## Claims

1. An ignition system for a smoking machine, comprising a heat source that is adapted for emitting heat for igniting one end of a smoking article which is held by a smoking machine; an automatic sensor which is adapted for detecting the position of said end of the smoking article; and control means in communication with said sensor, which are adapted for automatically adjusting a parameter of the operation of said heat source depending on the position of said end as detected by said sensor, such as to enable successful ignition of said end by said heat source.

2. An ignition system as claimed in claim 1, wherein said heat source is adapted for emitting heat by air convection for igniting said end of the smoking article, and said control means is adapted to automatically adjust the temperature of the heat source, the adjustment depending upon the location of said end, as detected by the sensor.

3. An ignition system as claimed in claim 1 or claim 2, wherein said control means is adapted to adjust the channelling of heat from said heat source to said end of the smoking article, by selectively dispersing heat away from the end of the smoking article and/or selectively directing heat towards the smoking article, as required.

4. An ignition system as claimed in any of claims 1-3, wherein said heat source is adapted for emitting heat for igniting said end of the smoking article by electromagnetic radiation, and said control means is adapted for automatically adjusting the level and/or the wavelength range of electromagnetic radiation that is applied by the heat source to the end of the smoking article for igniting the article, the adjustment depending upon the position of said end as detected by the sensor.

5. An ignition system as claimed in claim 4, wherein said control means is adapted for automatically adjusting the level and/or the wavelength range of electromagnetic radiation that is emitted from the heat source.

6. An ignition system as claimed in claim 4 or claim 5, wherein said control means is adapted for adjusting the level and/or the wavelength range of electromagnetic radiation that is transmitted from the heat source to the end of the smoking article.

7. An ignition system as claimed in claim 6, wherein said control means is adapted for adjustably shielding and/or obscuring said heat source from said end of the smoking article, and/or for selectively focusing radiation emitted by said heat source onto said end, and/or for selectively deflecting radiation emitted by said heat source away from said end.

8. An ignition system as claimed in claim 7, wherein said control means includes adjustable shield means which can be positioned and adjusted in order to shield a selected area of the heat source from the end of the smoking article, and/or adjustable reflecting and/or refracting means which are adapted to selectively focus or direct radiation emitted from the heat source towards said end of the smoking article, and/or adjustable refracting and/or deflecting means which are adapted to selectively direct radiation emitted from the heat source away from the end of the smoking article.

9. An ignition system as claimed in claim 7 or claim 8, wherein said control means comprises at least one thermal filter, which thermal filter is adapted to absorb or reflect a proportion of radiation impinging on the filter, which thermal filter is arranged to be removably positioned between said heat source and the end of the smoking article such as to prevent the transmission of a proportion of radiation emitted from said heat source towards said smoking article.

10. An ignition system as claimed in claim 9, wherein said control means comprises one or more variable or dichroic filters, each variable or dichroic filter including a plurality of discrete areas with different absorption/reflection characteristics, such that by positioning the variable or dichroic filter between the heat source and the end of the smoking article and moving the variable or dichroic filter relative to the heat source and the smoking article, the quantity of electromagnetic radiation transmitted from the heat source to the smoking article may be adjusted as required.

11. An ignition system as claimed in any preceding claim, wherein said control means is adapted to automatically adjust the time for which heat is applied to the end of the smoking article for igniting the article, depending upon the location of said end.

12. An ignition system as claimed in any preceding claim, wherein said control means is adapted to automatically adjust the timing of the application of heat with respect to the puff cycle of a smoking machine, depending upon the position of said end of the smoking article as detected by the sensor.

13. An ignition system as claimed in any of the preceding claims, wherein said control means is further adapted to automatically adjust relative movement of said heat source and/or said smoking article, such that a predetermined distance separates said heat source from said end of the smoking article, whereby said end of the smoking article can be successfully ignited by the heat source.

14. An ignition system as claimed in claim 13, wherein said heat source is capable of movement with respect to said smoking article, and said control means is adapted for controlling movement of said heat source, whereby the heat source under the control of said control means can be moved into or halted at a selected position.

15. An ignition system as claimed in claim 13 or claim 14, wherein said control means is adapted for controlling movement of a smoking article held by a smoking machine, whereby said smoking article under the control of said control means can be moved into or halted at a selected position.

16. An ignition system as claimed in any of claims 13-15, wherein said sensor is arranged to detect the end of a smoking article when said end is disposed at said predetermined distance from the heat source, or when said end is positioned such that after subsequent movement of said smoking article and/or said heat source along a pre-set locus, said end will be disposed at said predetermined distance from the heat source.

17. An ignition system as claimed in any of claims 13-16, which ignition system is arranged such that following detection of said end of the smoking article by said sensor, said heat source and/or said smoking article are moved under the control of the control means such as to achieve said predetermined distance between said heat source and said end of the smoking article.

18. An ignition system as claimed in any of claims 13-17, wherein said sensor is adapted for determining when the end of said smoking article is in said predetermined position.

19. An ignition system as claimed in any preceding claim, wherein said sensor is adapted for identifying the position of said end of the smoking article amongst a range of possible positions.

20. An ignition system as claimed in any preceding claim, wherein the arrangement is such that said end of the smoking article can be selectively shielded from said heat source, such as to prevent substantial transfer of heat from said heat source to said end.

21. An ignition system according to any of the preceding claims, wherein the sensor is arranged to detect radiation reflected from or emitted by the smoking article.

22. An ignition system for a smoking machine, comprising a heat source that is adapted for emitting heat for igniting one end of a smoking article which is held by a smoking machine; an automatic sensor which is adapted for detecting the position of said end of the smoking article; and control means in communication with said sensor, which are adapted for automatically adjusting a parameter of the operation of said heat source and/or for automatically adjusting relative movement of said heat source and/or of said article, depending on the position of said end as detected by said sensor, such as to enable successful ignition of said end by said heat source, wherein the sensor is arranged to detect radiation reflected from or emitted by the smoking article.

23. An ignition system according to claim 21 or 22, wherein said sensor comprises a range finding sensor which is adapted to transmit signals which are able to be reflected from a target, to detect signals reflected from said target, and to analyse said reflected signals.

24. An ignition system according to claim 21 or 22, wherein said sensor comprises a camera type device which is capable of visualising the smoking article.

25. A smoking machine comprising holding means for holding a smoking article such as to expose one end thereof, puffing means positioned adjacent the other end of the smoking article for drawing air through the smoking article, and an ignition system in accordance with any of claims 1-24 for igniting said one end of the smoking article such that the article can be smoked by the smoking machine.

26. A smoking machine as claimed in claim 25, which machine is capable of holding a plurality of smoking articles, and said lighting system is adapted for igniting each of said smoking articles consecutively.

27. A smoking machine as claimed in claim 25 or claim 26, which machine is adapted for moving each smoking article which is to be ignited to a position such that the end of the smoking article is within a small distance, such as to within a few centimetres or a few millimetres, of said ignition head, prior to detection of said end by the sensor and consequent adjustment of the ignition head and/or the position of the smoking article.

## Patentansprüche

1. Zündsystem für eine Rauchmaschine, mit einer Wärmequelle, die Wärme zum Anzünden eines Endes eines von einer Rauchmaschine gehaltenen Rauchgegenstands emittieren kann; einem automatischen Sensor, der die Position des Endes des Rauchgegenstandes detektieren kann; und einem mit dem Sensor verbundenen Steuermittel, welche automatisch einen Betrichsparameter für die Wärmequelle abhängig von der Position des von dem Sensor delektierten Endes derart einstellen können, dass das Ende erfolgreich von der Wärmequelle angezündet werden kann.

2. Zündsystem nach Anspruch 1, wobei die Wärmequelle Wärme zum Anzünden des Endes des Rauchgegenstands durch Luftkonvektion emittieren kann und das Steuermittel automatisch die Temperatur der Wärmequelle einstellen kann, wobei die Einstellung von der Lagestelle des von dem Sensor detektierten Endes abhängt.

3. Zündsystem nach Anspruch 1 oder Anspruch 2, wobei das Steuermittel durch wahlweises Verteilen der Wärme von dem Ende des Rauchgegenstandes weg und/oder wahlweises Richten der Wärme zu dem Rauchgegenstand hin je nach Bedarf die Kanalisierung der Wärme von der Wärmequelle zu dem Ende des Rauchgegenstands einstellen kann.

4. Zündsystem nach einem der Ansprüche 1 - 3, wobei die Wärmequelle Wärme zum Anzünden des Endes des Rauchgegenstandes durch elektromagnetische Strahlung emittieren kann und das Steuermittel automatisch den Pegel und/oder den Wellenlängenbereich der elektromagnetischen Strahlung einstellen kann, welchen die Wärmequelle zum Anzünden des Gegenstandes an das Ende des Rauchgegenstandes anlegt, wobei die Einstellung von der Position des von dem Sensor detektierten Endes abhängt.

5. Zündsystem nach Anspruch 4, wobei das Steuermittel automatisch den Pegel und/oder den Wellenlängenbereich der elektromagnetischen Strahlung einstellen kann, welche die Wärmequelle emittiert.

6. Zündsystem nach Anspruch 4 oder Anspruch 5, wobei das Steuermittel den Pegel und/oder den Wellenlängenbereich der elektromagnetischen Strahlung einstellen kann, welcher von der Wärmequelle zu dem Ende des Rauchgegenstands übertragen wird.

7. Zündsystem nach Anspruch 6, wobei das Steuermittel die Wärmequelle einstellbar von dem Ende des Rauchgegenstands abschirmen oder vor diesem abdecken und/oder die von der Wärmequelle emittierte Strahlung wahlweise auf das Ende fokussieren und/oder die von der Wärmequelle emittierte Strahlung wahlweise von dem Ende weg ablenken kann.

8. Zündsystem nach Anspruch 7, wobei das Steuermittel einstellbare Abschirmmittel, welche zum Abschirmen eines ausgewählten Bereiches der Wärmequelle von dem Ende des Rauchgegenstandes positioniert und eingestellt werden können, und/oder einstellbare Ablenk- und/oder Brechungsmittel, welche die von der Wärmequelle emittierte Strahlung wahlweise auf das Ende des Rauchgegenstandes fokussieren oder richten können, und/oder einstellbare Brechungsmittel und/oder Ablenkmittel umfasst, welche die von der Wärmequelle emittierte Strahlung wahlweise von dem Ende des Rauchgegenstands weg richten können.

9. Zündsystem nach Anspruch 7 oder Anspruch 8, wobei das Steuermittel mindestens einen Wärmefilter umfasst, wobei dieser Wärmefilter einen Anteil der auf den Filter auftreffenden Strahlung absorbieren oder reflektieren kann und dieser Wärmefilter entfernbar derart zwischen der Wärmequelle und dem Ende des Rauchgegenstands positioniert werden kann, dass kein Anteil der von der Wärmequelle emittierten Strahlung zu dem Rauchgegenstand hin übertragen werden kann.

10. Zündsystem nach Anspruch 9, wobei das Steuermittel einen oder mehrere variable oder dichroitische Filter umfasst, wobei jeder variable oder dichroitische Filter eine Mehrzahl von diskreten Bereichen mit unterschiedlichen Absorptions- und Reflexionseigenschaften umfasst, derart dass durch das Positionieren des variablen oder dichroitischen Filters zwischen der Wärmequelle und dem Ende des Rauchgegenstandes und Bewegen des variablen oder dichroitischen Filters relativ zu der Wärmequelle und dem Rauchgegenstand die Menge der von der Wärmequelle zu dem Rauchgegenstand übertragenen elektromagnetischen Strahlung je nach Bedarf eingestellt werden kann.

11. Zündsystem nach einem vorhergehenden Anspruch, wobei das Steuermittel automatisch die Zeit einstellen kann, über welche abhängig von der Lagestelle des Endes Wärme zum Anzünden des Rauchgegenstands auf das Ende des Gegenstands aufgebracht wird.

12. Zündsystem nach einem vorhergehenden Anspruch, wobei das Steuermittel automatisch die Zeitgabe zum Aufbringen von Wärme in Bezug auf den Ausblaszyklus einer Rauchmaschine abhängig von der Position des von dem Sensor detektierten Endes des Rauchgegenstandes einstellen kann.

13. Zündsystem nach einem der vorhergehenden Ansprüche, wobei das Steuermittel außerdem automatisch die relative Bewegung der Wärmequelle und/oder des Rauchgegenstandes derart einstellen kann, dass die Wärmequelle durch einen vorgegebenen Abstand von dem Ende des Rauchgegenstandes getrennt ist, wodurch das Ende des Rauchgegenstandes erfolgreich von der Wärmequelle angezündet werden kann.

14. Zündsystem nach Anspruch 13, wobei sich die Wärmequelle in Bezug auf den Rauchgegenstand bewegen kann und das Steuermittel die Bewegung der Wärmequelle steuern kann, wodurch die Wärmequelle unter Steuerung durch das Steuermittel in eine ausgewählte Stellung bewegt oder an dieser angehalten werden kann.

15. Zündsystem nach Anspruch 13 oder Anspruch 14, wobei das Steuermittel die Bewegung eines von einer Rauchmaschine gehaltenen Rauchgegenstandes steuern kann, wodurch der Rauchgegenstand unter Steuerung durch das Steuermittel in eine ausgewählte Stellung bewegt oder an dieser angehalten werden kann.

16. Zündsystem nach einem der Ansprüche 13 - 15, wobei der Sensor das Ende eines Rauchgegenstands detektieren kann, wenn das Ende in dem vorgegebenen Abstand von der Wärmequelle angeordnet ist, oder wenn das Ende derart positioniert ist, dass das Ende nach dem nachfolgenden Bewegen des Rauchgegenstandes und/oder der Wärmequelle entlang einem voreingestellten Ort in dem vorgegebenen Abstand von der Wärmequelle angeordnet ist.

17. Zündsystem nach einem der Ansprüche 13 - 16, wobei das Zündsystem derart angeordnet ist, dass nach der Detektierung des Endes des Rauchgegenstands durch den Sensor die Wärmequelle und/oder der Rauchgegenstand unter Steuerung durch das Steuermittel derart bewegt werden, dass der vorgegebene Abstand zwischen der Wärmequelle und dem Ende des Rauchgegenstandes zustande kommt.

18. Zündsystem nach einem der Ansprüche 13 - 17, wobei der Sensor feststellen kann, wann sich das Ende des Rauchgegenstandes in der vorgegebenen Position befindet.

19. Zündsystem nach einem vorhergehenden Anspruch, wobei der Sensor die Position des Endes des Rauchgegenstandes innerhalb eines Bereiches von möglichen Positionen erkennen kann.

20. Zündsystem nach einem vorhergehenden Anspruch, wobei die Anordnung derart ist, dass das Ende des Rauchgegenstandes wahlweise derart von der Wärmequelle abgeschirmt werden kann, dass keine wesentliche Übertragung von Wärme von der Wärmequelle zu dem Ende erfolgen kann.

21. Zündsystem nach einem vorhergehenden Anspruch, wobei der Sensor eine von dem Rauchgegenstand reflektiert oder durch diesen emittierte Strahlung detektieren kann.

22. Zündsystem für eine Rauchmaschine, mit einer Wärmequelle, die Wärme zum Anzünden eines Endes eines von einer Rauchmaschine gehaltenen Rauchgegenstands emittieren kann; einem automatischen Sensor, der die Position des Endes des Rauchgegenstandes detektieren kann; und einem mit dem Sensor verbundenen Steuermittel, welche automatisch einen Betricbsparameter für die Wärmequelle einstellen und/oder automatisch die relative Bewegung der Wärmequelle und/oder des Gegenstandes abhängig von der Position des von dem Sensor detektierten Endes derart einstellen können, dass das Ende erfolgreich von der Wärmequelle angezündet werden kann, wobei der Sensor eine von dem Rauchgegenstand reflektierte oder durch diesen emittierte Strahlung detektieren kann.

23. Zündsystem nach Anspruch 21 oder 22, wobei der Sensor einen Bereichssuchsensor umfasst, der Signale senden kann, die von einem Ziel reflektiert werden können, die von dem Ziel reflektierten Signale detektieren und die reflektierten Signale analysieren kann.

24. Zündsystem nach Anspruch 21 oder 22. wobei der Sensor eine kameraartige Vorrichtung umfasst, welche den Rauchgegenstand sichtbar mnchcn kann.

25. Rauchmaschine mit Haltemitteln zum Halten eines Rauchgegenstandes derart, dass das eine Ende desselben freiliegt, angrenzend an das andere Ende des Rauchartikels positionierten Ausblasmitteln zum Einsaugen von Luft durch den Rauchgegenstand hindurch und einem Zündsystem gemäß einem der Ansprüche 1 - 24 zum Anzünden eines Endes des Rauchgegenstandes derart, dass der Gegenstand von der Rauchmaschine geraucht werden kann.

26. Rauchmaschine nach Anspruch 25, wobei die Maschine eine Mehrzahl von Rauchgegenständcn halten kann und das Zündsystem jeden der Rauchgegenstände nacheinander anzünden kann.

27. Rauchmaschine nach Anspruch 25 oder Anspruch 26, wobei die Maschine jeden anzuzündenden Rauchgegenstand in eine derartige Position bewegen kann, dass sich das Ende des Rauchgegenstandes vor dem Detektieren des Endes durch den Sensor und dem dementsprechenden Einstellen des Zündkopfes und/oder der Position des Rauchgegenstandes innerhalb eines kleinen Abstands, beispielsweise innerhalb weniger Zentimeter oder weniger Millimeter, von dem Zündkopf befindet.

## Revendications

1. Système d'allumage pour une machine à fumer, comprenant une source de chaleur qui est conçue pour émettre de la chaleur afin d'allumer une extrémité d'un article à fumer qui est maintenu par une machine à fumer ; un capteur automatique qui est conçu pour détecter la position de ladite extrémité de l'article à fumer ; et des moyens de commande en communication avec ledit capteur, qui sont conçus pour régler automatiquement un paramètre du fonctionnement de ladite source de chaleur en fonction de la position de ladite extrémité détectée par ledit capteur, de façon à permettre un allumage réussi de ladite extrémité par ladite source de chaleur.

2. Système d'allumage selon la revendication 1, dans lequel ladite source de chaleur est conçue pour émettre de la chaleur par convection d'air afin d'allumer ladite extrémité de l'article à fumer et lesdits moyens de commande sont conçus pour régler automatiquement la température de la source de chaleur, le réglage dépendant de la position de ladite extrémité, détectée par le capteur.

3. Système d'allumage selon la revendication 1 ou la revendication 2, dans lequel lesdits moyens de commande sont conçus pour régler la canalisation de la chaleur émise par ladite source de chaleur vers ladite extrémité de l'article à fumer, en dispersant sélectivement la chaleur pour l'éloigner de l'extrémité de l'article à fumer et/ou en dirigeant de manière sélective la chaleur vers l'article à fumer, selon les besoins.

4. Système d'allumage selon l'une quelconque des revendications 1 à 3, dans lequel ladite source de chaleur est conçue pour émettre de la chaleur afin d'allumer ladite extrémité de l'article à fumer par rayonnement électromagnétique et lesdits moyens de commande sont conçus pour régler automatiquement le niveau et/ou la gamme de longueurs d'onde du rayonnement électromagnétique qui est appliqué par la source de chaleur à l'extrémité de l'article à fumer afin d'allumer l'article, le réglage dépendant de la position de ladite extrémité détectée par le capteur.

5. Système d'allumage selon la revendication 4, dans lequel lesdits moyens de commande sont conçus pour régler automatiquement le niveau et/ou la gamme de longueurs d'onde du rayonnement électromagnétique qui est émis par la source de chaleur.

6. Système d'allumage selon la revendication 4 ou la revendication 5, dans lequel lesdits moyens de commande sont conçus pour régler le niveau et/ou la gamme de longueurs d'onde du rayonnement électromagnétique qui est transmis de la source de chaleur à l'extrémité de l'article à fumer.

7. Système d'allumage selon la revendication 6, dans lequel lesdits moyens de commande sont conçus pour faire écran à et/ou occulter de manière réglable ladite source de chaleur par rapport à ladite extrémité de l'article à fumer, et/ou pour focaliser de manière sélective le rayonnement émis par ladite source de chaleur sur ladite extrémité, et/ou pour dévier de manière sélective le rayonnement émis par ladite source de chaleur et l'éloigner de ladite extrémité.

8. Système d'allumage selon la revendication 7, dans lequel lesdits moyens de commande comprennent des moyens d'écran réglables qui peuvent être positionnés et réglés pour faire écran à une zone choisie de la source de chaleur par rapport à l'extrémité de l'article à fumer, et/ou des moyens de réflexion et/ou de réfraction réglables qui sont conçus pour focaliser et/ou diriger de manière sélective le rayonnement émis par la source de chaleur vers ladite extrémité de l'article à fumer, et/ou des moyens de déflexion et/ou de réfraction réglables qui sont conçus pour diriger de manière sélective le rayonnement émis par la source de chaleur et l'éloigner de l'extrémité de l'article à fumer.

9. Système d'allumage selon la revendication 7 ou la revendication 8, dans lequel lesdits moyens de commande comprennent au moins un filtre thermique, lequel filtre thermique est conçu pour absorber ou réfléchir une proportion du rayonnement incident sur le filtre, lequel filtre thermique est conçu pour être positionné de manière amovible entre ladite source de chaleur et l'extrémité de l'article à fumer de façon à empêcher la transmission d'une proportion du rayonnement émis par ladite source de chaleur vers ledit article à fumer.

10. Système d'allumage selon la revendication 9, dans lequel lesdits moyens de commande comprennent un ou plusieurs filtres variables ou dichroïques, chaque filtre variable ou dichroïque comprenant une pluralité de zones discrètes présentant des caractéristiques d'absorption/réflexion différentes, de sorte qu'en positionnant le filtre variable ou dichroïque entre la source de chaleur et l'extrémité de l'article à fumer et en déplaçant le filtre variable ou dichroïque par rapport à la source de chaleur et à l'article à fumer, la quantité de rayonnement électromagnétique transmis de la source de chaleur à l'article à fumer peut être ajustée selon les besoins.

11. Système d'allumage selon l'une quelconque des revendications précédentes, dans lequel lesdits moyens de commande sont conçus pour régler automatiquement la durée pendant laquelle la chaleur est appliquée à l'extrémité de l'article à fumer afin d'allumer l'article, en fonction de la position de ladite extrémité.

12. Système d'allumage selon l'une quelconque des revendications précédentes, dans lequel lesdits moyens de commande sont conçus pour régler automatiquement la durée de l'application de chaleur par rapport au cycle de bouffée d'une machine à fumer, en fonction de la position de ladite extrémité de l'article à fumer détectée par le capteur.

13. Système d'allumage selon l'une quelconque des revendications précédentes, dans lequel lesdits moyens de commande sont en outre conçus pour régler automatiquement le déplacement relatif de ladite source de chaleur et/ou dudit article à fumer, de sorte qu'une distance prédéterminée sépare ladite source de chaleur de ladite extrémité de l'article à fumer, si bien que ladite extrémité de l'article à fumer peut être allumée avec succès par la source de chaleur.

14. Système d'allumage selon la revendication 13, dans lequel ladite source de chaleur est capable de se déplacer par rapport audit article à fumer et lesdits moyens de commande sont conçus pour commander le déplacement de ladite source de chaleur, si bien que la source de chaleur commandée par lesdits moyens de commande peut être déplacée jusqu'à ou arrêtée au niveau d'une position choisie.

15. Système d'allumage selon la revendication 13 ou la revendication 14, dans lequel lesdits moyens de commande sont conçus pour commander le déplacement d'un article à fumer maintenu par une machine à fumer, si bien que ledit article à fumer commandé par lesdits moyens de commande peut être déplacé jusqu'à ou arrêté au niveau d'une position choisie.

16. Système d'allumage selon l'une quelconque des revendications 13 à 15, dans lequel ledit capteur est conçu pour détecter l'extrémité d'un article à fumer lorsque ladite extrémité est placée à ladite distance prédéterminée par rapport à la source de chaleur ou lorsque ladite extrémité est placée de telle sorte qu'après un déplacement ultérieur dudit article à fumer et/ou de ladite source de chaleur le long d'un axe prédéterminé, ladite extrémité se trouvera à ladite distance prédéterminée par rapport à la source de chaleur.

17. Système d'allumage selon l'une quelconque des revendications 13 à 16, dont le système d'allumage est conçu de telle sorte qu'après la détection de ladite extrémité de l'article à fumer par ledit capteur, ladite source de chaleur et/ou ledit article à fumer sont déplacés sous la commande des moyens de commande de façon à atteindre ladite distance prédéterminée entre ladite source de chaleur et ladite extrémité de l'article à fumer.

18. Système d'allumage selon l'une quelconque des revendications 13 à 17, dans lequel ledit capteur est conçu pour déterminer le moment où l'extrémité dudit article à fumer se trouve dans ladite position prédéterminée.

19. Système d'allumage selon l'une quelconque des revendications précédentes, dans lequel ledit capteur est conçu pour identifier la position de ladite extrémité de l'article à fumer parmi une gamme de positions possibles.

20. Système d'allumage selon l'une quelconque des revendications précédentes, dans lequel la configuration est telle que ladite extrémité de l'article à fumer peut être protégée avec un écran de manière sélective de ladite source de chaleur, de façon à empêcher un transfert de chaleur significatif de ladite source de chaleur vers ladite extrémité.

21. Système d'allumage selon l'une quelconque des revendications précédentes, dans lequel le capteur est conçu pour détecter un rayonnement réfléchi sur ou émis par l'article à fumer.

22. Système d'allumage pour une machine à fumer, comprenant une source de chaleur qui est conçue pour émettre de la chaleur afin d'allumer une extrémité d'un article à fumer qui est maintenu par une machine à fumer ; un capteur automatique qui est conçu pour détecter la position de ladite extrémité de l'article à fumer ; et des moyens de commande en communication avec ledit capteur, qui sont conçus pour régler automatiquement un paramètre du fonctionnement de ladite source de chaleur et/ou pour régler automatiquement le déplacement relatif de ladite source de chaleur et/ou dudit article, en fonction de la position de ladite extrémité détectée par ledit capteur, de façon à permettre un allumage réussi de ladite extrémité par ladite source de chaleur, dans lequel le capteur est conçu pour détecter un rayonnement réfléchi sur ou émis par l'article à fumer.

23. Système d'allumage selon la revendication 21 ou 22, dans lequel ledit capteur comprend un capteur télémétrique qui est conçu pour émettre des signaux qui peuvent être réfléchi sur une cible, pour détecter des signaux réfléchis sur ladite cible et pour analyser lesdits signaux réfléchis.

24. Système d'allumage selon la revendication 21 ou 22, dans lequel ledit capteur comprend un dispositif de type appareil photographique qui est capable de visualiser l'article à fumer.

25. Machine à fumer comprenant des moyens de maintien pour maintenir un article à fumer de façon à dénuder une extrémité de celui-ci, des moyens d'émission de bouffées placés à côté de l'autre extrémité de l'article à fumer pour aspirer de l'air à travers l'article à fumer et un système d'allumage selon l'une quelconque des revendications 1 à 24 pour allumer ladite première extrémité de l'article à fumer de façon à permettre à l'article d'être fumé par la machine à fumer.

26. Machine à fumer selon la revendication 25, laquelle machine est capable de maintenir une pluralité d'articles à fumer et ledit système d'allumage est conçu pour allumer chacun desdits articles à fumer de manière consécutive.

27. Machine à fumer selon la revendication 25 ou la revendication 26, laquelle machine est conçue pour déplacer chaque article à fumer devant être allumé jusqu'à une position telle que l'extrémité de l'article à fumer se trouve à une petite distance, par exemple à quelques centimètres ou à quelques millimètres, de ladite tête d'allumage, avant la détection de ladite extrémité par le capteur et le réglage consécutif de la tête d'allumage et/ou de la position de l'article à fumer.
